Europäisches Patentamt

European Patent Office

Office européen des brevets

(11) Publication number: **0 315 601**
A2

(12) **EUROPEAN PATENT APPLICATION**

(21) Application number: **88830460.7**

(22) Date of filing: **28.10.88**

(51) Int. Cl.⁴: **B 28 B 11/14**
B 28 B 1/52, B 26 D 1/60

(30) Priority: **02.11.87 IT 6792287**

(43) Date of publication of application:
**10.05.89 Bulletin 89/19**

(84) Designated Contracting States:
**AT BE CH DE ES FR GB GR IT LI LU NL SE**

(71) Applicant: **Lapiccirella, Raffaele
Via Rivoli 122
I-10090 Villarbasse Torino (IT)**

(72) Inventor: **Lapiccirella, Raffaele
Via Rivoli 122
I-10090 Villarbasse Torino (IT)**

(74) Representative: **Jacobacci, Filippo et al
c/o JACOBACCI-CASETTA & PERANI S.p.A. Via Alfieri 17
I-10121 Torino (IT)**

(54) Cutting device for absestos cement or similar material slabs.

(57) Cutting apparatus is associated with the conveyor belt (N) for a continuous board of asbestos cement or like material and includes a carriage (14) with rotatable rollers (28, 30) beneath the upper conveyor plane, over which the belt (N) passes so as to define a space (a) in which a disc (31) for cutting the board transversely can act. The cutting is carried out when the carriage (14) moves together with the belt (N) by virtue of the locking effected by a first roller (28), the return of the carriage to the starting position being achieved by the engagement of a set of teeth fixed to the structure of the conveyor (T) with a gear (44) rotated by a second roller (30), with the interposition of a clutch.

FIG.1

EP 0 315 601 A2

## Description

### Apparatus for cutting boards of asbestos cement or like material

The present invention relates to apparatus for cutting a continuous board, particularly of asbestos cement or like material, supported by a conveyor belt.

In plants for the production of asbestos cement products, it is necessary to cut the continuous board transversely when it is in the pasty state obtained from a cement and asbestos paste or, more recently, by the superposition of thin layers of cement with the interposition of polypropylene reinforcing nets. The transverse cutting of the board is normally achieved with the board stationary on a conveyor belt arranged for the cutting. This is a cause of low productivity in such plants, as well as low reliability of the latter.

The object of the present invention is to provide cutting apparatus of the type specified at the beginning of the description, which does not have these disadvantages and which is simple and cheap to produce.

According to the invention, this object is achieved by virtue of the fact that the apparatus comprises a carriage disposed transverse the belt and supported by the structure of the conveyor for sliding longitudinally of the belt, a motor-driven slide supported by the carriage for sliding transversely above the belt and carrying cutting means for cutting the board, first and second idle return rollers rotatably supported by the carriage so as to face each other transverse the direction of advance of the belt and touch the conveyor plane on which the board lies, at least one auxiliary roller located below the conveyor plane and rotatably supported by the carriage parallel to the return rollers, the belt passing around the return rollers and the auxiliary roller so as to form a substantially U-shaped loop beneath the conveyor plane, first drive means for locking the auxiliary roller against rotation so as to make the carriage fast with the conveyor belt and cause its advance, and second drive means for returning the carriage to a starting position, the cutting means acting between the two return rollers during the activation of the first drive means.

By virtue of these characteristics, the continuous board is cut while the conveyor belt is moving with all the resultant advantages in terms of greater productivity and greater reliability of the apparatus.

Preferably, the cutting apparatus includes first and second auxiliary rollers, and the second drive means include drive transmission means interposed between the second auxiliary roller and the structure of the conveyor and clutch means associated with the drive transmission means.

Thus, it is not necessary to provide a suitable motor drive for returning the carriage to its initial position since the movement of the conveyor belt is used and, by rotating the second auxiliary roller, also drives the translational movement of the carriage in the opposite direction from that of the belt by virtue of the presence of the transmission means and the clutch means arranged to act at the end of the cutting operation.

Further advantages and characteristics of the apparatus according to the invention will become clear from the detailed description which follows, provided purely by way of non-limiting example, with reference to the appended drawings, in which:

Figure 1 is a partially-sectioned schematic view of the apparatus according to the invention,

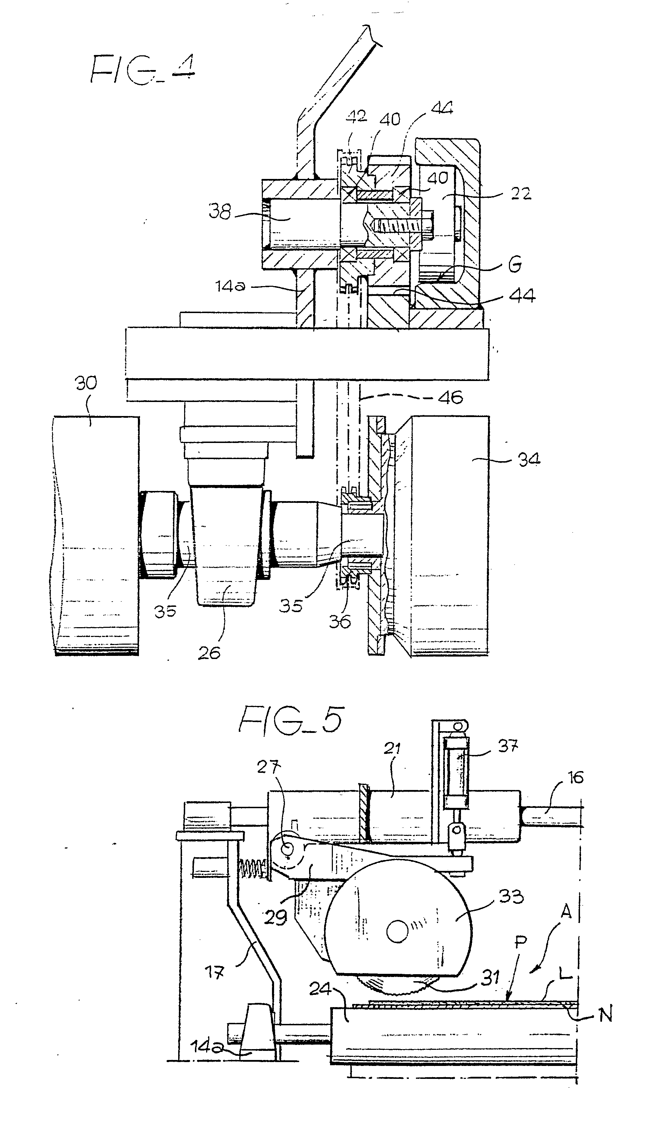

Figure 2 is a perspective view of the apparatus of Figure 1,

Figure 3 is a perspective view of the apparatus seen from the opposite side of the conveyor belt from Figure 2,

Figure 4 is a partially-sectioned view taken on the line IV-IV of Figure 3, and

Figure 5 is a detail of Figure 3.

With reference to the drawings, cutting apparatus, generally indicated 10, is associated with a conveyor belt T for conveying a continuous board L of asbestos cement from the zone of the plant in which the board L is spread on the belt N of the conveyor T. The latter has a support structure 12 including two channel-section longitudinal members 12a disposed laterally of the upper pass of the conveyor belt N and connected together by reinforcing beams 12b.

The cutting apparatus 10 has a carriage 14 with side plates 14a, a transverse stiffening bar 14b, and respective guides 16 and 18 fixed by respective shaped arms 17 and 19 to the side plates 14a of the carriage 14 and disposed above the board L. The guides 16 and 18 have an associated slide 20. The carriage 14 is supported laterally by the longitudinal members 12a by means of wheels 22 rotatably supported in a cantilevered manner by the side plates 14a and resting on lateral guides G formed on the inside of the longitudinal members 12a.

The end plates 14a of the carriage 14 also rotatably support the ends of two return rollers 24 located so as to touch a horizontal plane P defined by the upper pass of the belt N. Below the return rollers 24, the carriage 14 supports, through bushes 26, first and second auxiliary rollers 28 and 30 over which the belt N coming from the return rollers 24 passes so as to form a substantially U-shaped loop defining a transverse space A between the return rollers 24 in which the transverse cutting of the board L may be carried out.

At one end 28a, the first auxiliary roller 28 has a clutch 32, for example, of the pneumatic type, interposed between the carriage 14 and the roller 28 for locking it against rotation. In a similar manner, at one end 30a of the second auxiliary roller 30, there is a clutch 34 interposed between the shaft 35 on which the second auxiliary roller 30 is keyed and a first pinion 36 whose function will be clarified below.

A second pinion 42 is rotatably mounted on the side plate 14a of the carriage 14 in a cantilevered manner at 38, adjacent the first pinion 36, and a gear 44 is keyed laterally to the pinion 42. A chain 46 passes over the first and second pinions 36 and 42 respectively. The gear 44 meshes with a longitudinal set of teeth 48 fixed parallel to one of the longitudinal members 12a.

The carriage 14 also has a transverse shaft 50 rotatably supported by the end plates 14a by means of bushes 52 and carrying at its ends auxiliary gears 54 which engage respectively with the set of teeth 48 mentioned above and with an auxiliary set of teeth 56 parallel to the first set and located in correspondence with the opposite longitudinal member 12a.

The slide 20 which is slidable on the guides 16 and 18 has a structure 20a to which is fixed a linear pneumatic actuator 21, a support shoe 23 and a central control 25 for the distribution of compressed air. An auxiliary structure 29 is also articulated at 27 to the structure 20a of the slide 20 and is rotatable about an axis X-X which is horizontal and parallel to the direction of advance of the belt N. The auxiliary structure 29 supports a disc saw 31 about an axis parallel to the articulation axis X-X, the saw being rotatable by an electric motor 35 and having a protective housing 33 around its upper part. A pneumatic cylinder 37 is interposed between the auxiliary structure 29 and the structure 20a of the slide 20 for lowering and raising the circular saw 31 relative to the horizontal plane P.

In operation, the conveyor belt N carries on its upper plane P the continuous asbestos cement board L whose edges are trimmed upstream of the cutting apparatus 10 by longitudinal cutting discs D. In the interval between two successive cutting operations on the board L, the clutches 32 and 34 are deactivated so that the carriage 14 is stationary relative to the structure 12 of the conveyor T, the auxiliary rollers 29 and 30 being free to rotate about their axes. Subsequently, as a result of a suitable signal provided by a central control unit of the apparatus (not illustrated), the clutch 32 is activated so as to lock the first auxiliary roller 28 against rotation, thus making it fast with the conveyor belt. The latter thus drives the translational movement of the carriage 14 at the same speed as the board L. During this translational movement, the linear actuator 21 associated with the slide 20 moves the latter with the simultaneous activation of the pneumatic actuator 37 which, by lowering the circular saw 31, causes the transverse cutting of the board L in the space A between the two return rollers 24.

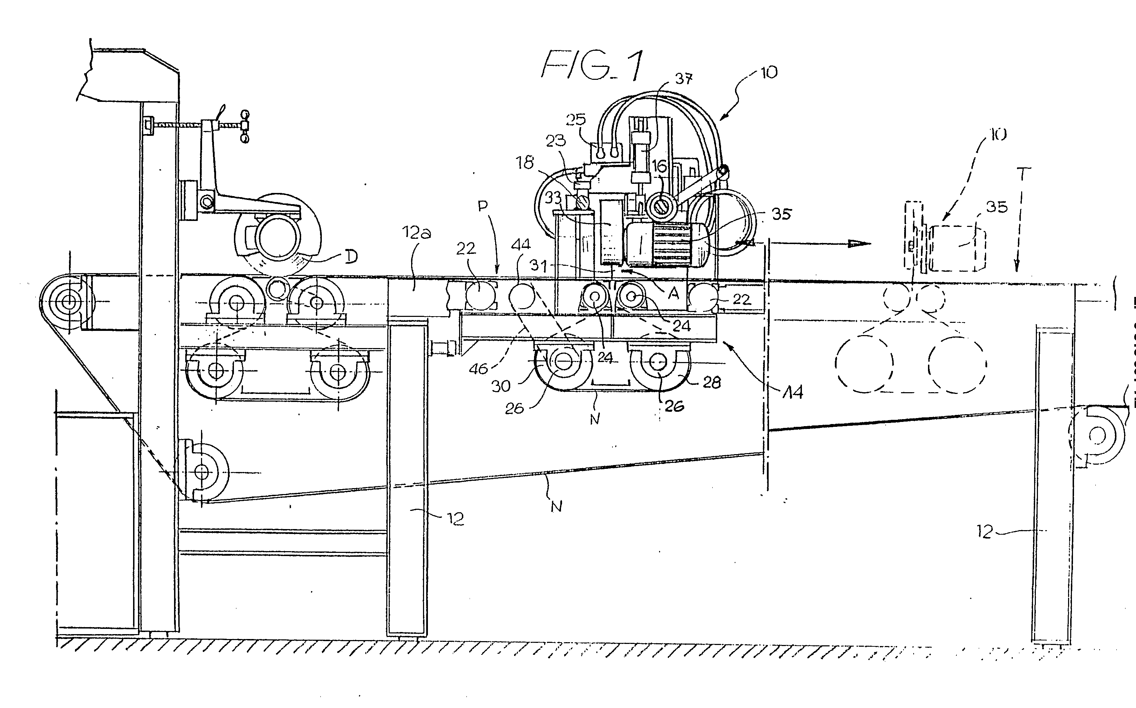

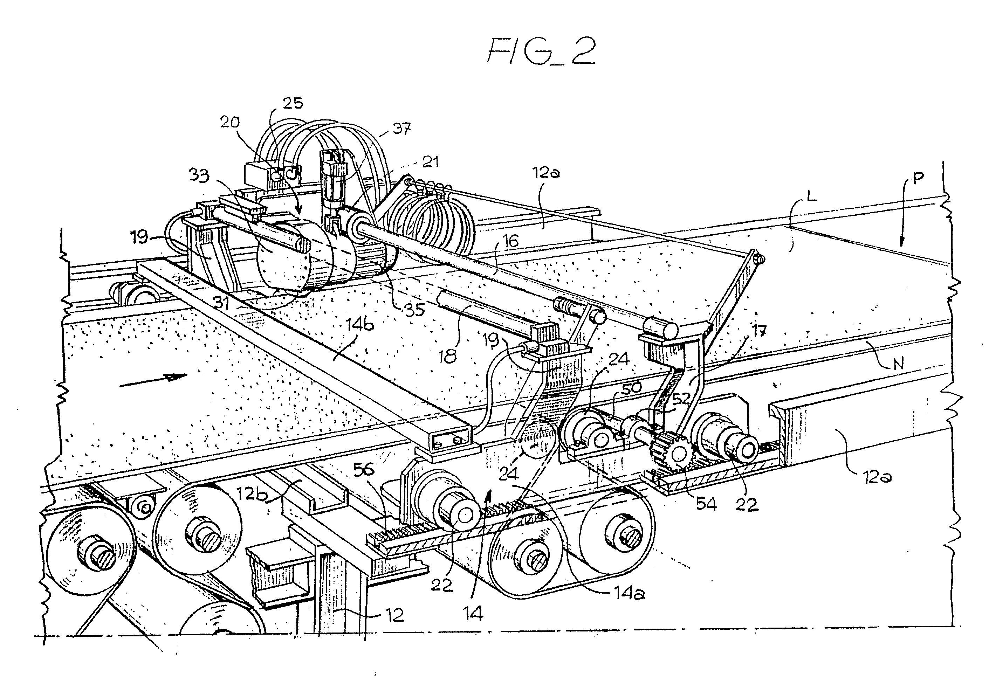

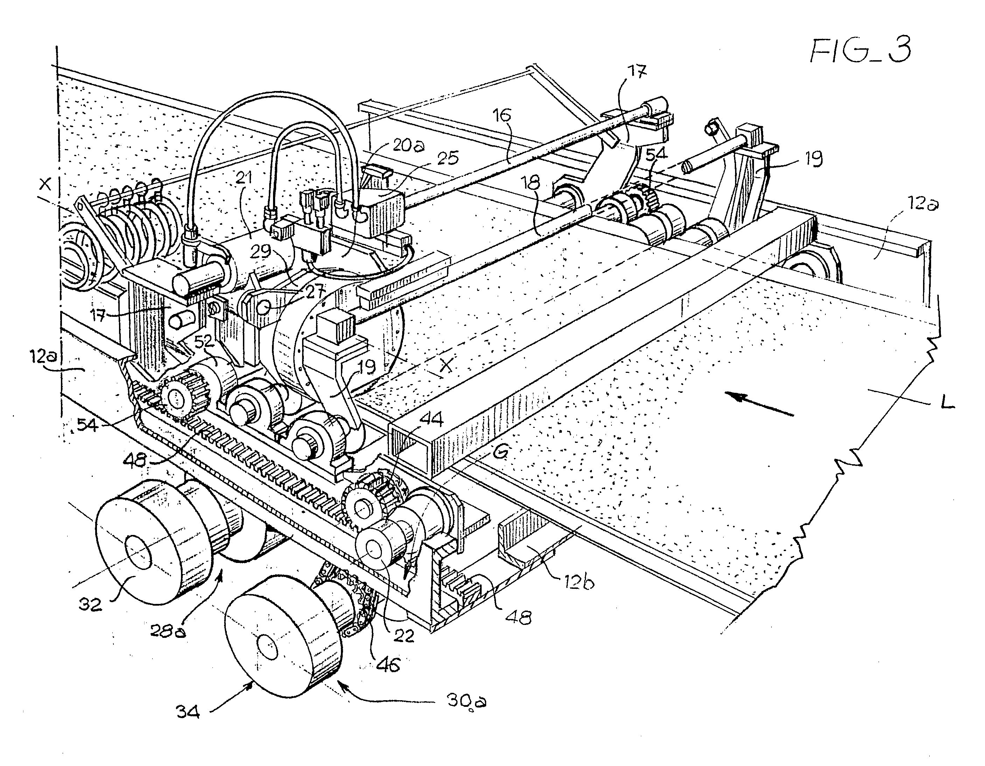

After this forward movement, the slide 20 is returned and the auxiliary structure 29 of the slide 20 is raised. When the cutting of the board L is finished (see the configuration indicated in broken outline in Figure 1), the clutch 32 is deactivated and the clutch 34 is activated simultaneously to connect the second auxiliary roller 30 for rotation with the first pinion 36 and, by virtue of the rotation of the second auxiliary roller 30 driven by the conveyor belt N, causes the rotation of the gear 44 engaged with the set of teeth 48 so as to cause the movement of the carriage 14 and its associated slide 20 in the direction opposite that of the board L. Once the starting position of the cycle of the apparatus 10 has been reached, the clutch 34 is deactivated so as to stop the translational movement.

The transverse shaft 50 of the carriage 14 associated with the end gears 54 meshed with the sets of teeth 48 and 54 prevents undesired yawing movements of the carriage which could prevent its translational movement. Support bars may to advantage be fixed to the carriage 14 in the space A between the return rollers 24 so as to be located in the horizontal plane P, in order to support the board L, which has little strength, during the cutting phase.

Naturally, the apparatus 10 has travel limit sensors, stop switches, etc. connected to the central control unit 4 for making the apparatus function in a predetermined cycle.

## Claims

1. Apparatus for cutting a continuous board, particularly of asbestos cement or like material, supported by a conveyor belt, characterised in that it comprises:
- a carriage (14) disposed transverse the belt (N) and supported by the structure (12, 12a) of the conveyor (T) for sliding longitudinally of the belt (N),
- a motor-driven slide (20) supported by the carriage (14) for sliding transversely above the belt (N) and carrying cutting means (31) for cutting the board (L),
- first and second idle return rollers (24) rotatably supported by the carriage (14) so as to face each other transverse the direction of advance of the belt (N) and touch the conveyor plane (P) on which the board (L) lies,
- at least one auxiliary roller (28, 30) located below the conveyor plane (P) and rotatably supported by the carriage (14) parallel to the return rollers (24), the belt (N) passing around the return rollers (24) and the auxiliary roller (28, 30) so as to form a substantially U-shaped loop beneath the conveyor plane (P),
- first drive means (32) for locking the auxiliary roller (28) against rotation so as to make the carriage (14) fast with the conveyor belt (N) and cause its advance,
- second drive means (34, 36, 46, 42, 44, 48) for returning the carriage (14) to a starting position, the cutting means (31) acting between the two return rollers (24) during the activation of the first drive means (32).

2. Apparatus according to Claim 1, characterised in that it has first and second auxiliary rollers (28, 30), and in that the second drive means include:
- drive transmission means (36, 46, 42, 44, 48) interposed between the second auxiliary roller (30) and the structure (12a) of the conveyor (T), and
- clutch means (34) associated with the drive transmission means.

3. Apparatus according to Claim 2, characterised in that the drive transmission means include:
- a first pinion (36) disposed in correspondence with one end (30a) of the second auxiliary roller (30),
- a second pinion (42) rotatably supported by the carriage (12a),
- a gear (44) keyed laterally to the second pinion (42),
- a transmission chain (46) which passes around the first and second pinions (36, 42), and
- a set of teeth (48) fixed longitudinally to the structure (12a) of the conveyor (T) and engaged with the gear (44).

4. Apparatus according to Claim 1, characterised in that the first drive means include a clutch (32) interposed between the auxiliary roller (28) and the carriage (14).

5. Apparatus according to Claim 2, characterised in that the clutch means are interposed between the second auxiliary roller (30) and the first pinion (36).

6. Apparatus according to Claim 1, characterised in that the cutting means comprise:
- a support (29) articulated to the slide (20a, 20) about a horizontal axis (X-X) substantially parallel to the direction of advance of the belt (N),
- a motor-driven cutting disc (31) rotatably supported by the support (29) about an axis substantially parallel to the articulation axis (X-X) of the support (29), and
- actuator means (37, 39) interposed between the slide (20a) and the support (29) for moving the support (29) between an operative configuration in which the cutting disc (31) interacts with the board (L) and a rest configuration in which the cutting disc (31) is completely above the conveyor plane (P) for the board (L).

7. Apparatus according to Claim 3, applied to a conveyor belt (T) having longitudinal members (12a) disposed laterally of the belt (N), characterised in that a transverse shaft (50) is rotatably mounted on the carriage (14) and carries two auxiliary gears (54) at its ends, the gears being adapted respectively to engage the said set of teeth (48) and an auxiliary set of teeth (56) fixed to one of the longitudinal members (12a).

FIG. 1

EP 0 315 601 A2

FIG_2

FIG_3

FIG_4

FIG_5